# EUROPEAN PATENT APPLICATION

(11) **EP 4 769 315 A1**
(43) Date of publication of application: **01.07.2026**
(21) Application number: 25775308.7
(22) Date of filing: 03.03.2025
(51) Int. Cl.: G06T 11/20

(54) **DRAWING METHOD, ELECTRONIC DEVICE, AND RELATED APPARATUS**

(30) Priority: 29.03.2024 CN 202410382498
(71) Applicant: Huawei Technologies Co., Ltd., Shenzhen, Guangdong 518129 (CN)
(72) Inventor: ZHU, Shuoling, Shenzhen, Guangdong 518129 (CN); WANG, Yaming, Shenzhen, Guangdong 518129 (CN); HUANG, Lei, Shenzhen, Guangdong 518129 (CN); WEN, Chunbo, Shenzhen, Guangdong 518129 (CN)
(74) Representative: Gill Jennings & Every LLP
(86) International application number: PCT/CN2025/080328
(87) International publication number: WO 2025/200947

(57) **Abstract**

This application provides a drawing method, an electronic device, and a related apparatus. In the method, an electronic device may identify contour points of a graph, and further identify a type of the graph based on the contour points of the graph. For example, the electronic device may identify that the graph is of a type such as an arc, an S-shaped curve, and a circular arc. In this way, a problem that the S-shaped curve cannot be processed and the circular arc is used as an arc for processing in a conventional technology is resolved, and processing accuracy is high. After the electronic device identifies the type of the graph, the electronic device may process the graph in a processing method corresponding to the type, to obtain a graph with a smooth line. In this way, graph processing accuracy can be improved. A processed graph is smoother and more standard.

## Description

This application claims priority to Chinese Patent Application No. 202410382498.6, filed with the China National Intellectual Property Administration on March 29, 2024 and entitled "DRAWING METHOD, ELECTRONIC DEVICE, AND RELATED APPARATUS", which is incorporated herein by reference in its entirety.

### TECHNICAL FIELD

Embodiments of this application relate to the field of drawing technologies, and in particular, to a drawing method, an electronic device, and a related apparatus.

### BACKGROUND

In a drawing application (application, APP), a user may draw a graph in a drawing area. The graph may include but is not limited to an arc, an ellipse, or a circle. To better display the graph drawn by the user, an electronic device may process the graph drawn by the user, so that a line of the arc is smoother, and shapes of the ellipse and the circle are more standard.

However, in a current processing method, graph identification effect is poor, and processing accuracy is low.

### SUMMARY

Embodiments of this application provide a drawing method, an electronic device, and a related apparatus, to improve graph processing accuracy.

According to a first aspect, an embodiment of this application provides a drawing method. The method may be performed by an electronic device, a chip in the electronic device, a processor, or the like. The following provides descriptions by using an example in which an execution body is the electronic device. In the method, a user may draw a graph on the electronic device (for example, an interface of a drawing application). Correspondingly, the electronic device may display a first graph in response to a drawing operation. To better display the graph drawn by the user, the electronic device may process the first graph drawn by the user. The following describes a method for processing the first graph by the electronic device in this embodiment of this application.

The electronic device may identify contour points of the first graph, and determine a type of the first graph based on the contour points of the first graph. The type of the first graph includes at least one of the following: an arc, an S-shaped curve, and a circular arc. In this embodiment of this application, the electronic device may identify contour points of a graph, and further identify a type of the graph based on the contour points of the graph. For example, the electronic device may identify that the graph is of a type such as an arc, an S-shaped curve, and a circular arc. In this way, a problem that the S-shaped curve cannot be processed and the circular arc is used as an arc for processing in a conventional technology is resolved, and processing accuracy is high.

In addition, in this embodiment of this application, for different types of graphs, processing methods corresponding to the different types of graphs are set in this embodiment of this application. After identifying the type of the graph, the electronic device processes the first graph in a processing method corresponding to the type of the first graph, to obtain a second graph; and displays the second graph. In this embodiment of this application, the electronic device may process the graph in the processing method corresponding to the type, to obtain a graph with a smooth line. In this way, graph processing accuracy can be improved, and a processed graph is smoother and more standard.

In a possible implementation, the electronic device may identify the contour points of the first graph based on a polygonal approximation algorithm. The polygonal approximation algorithm is a method in which a non-key point in the first graph is deleted through infinite approximation to a line of the first graph, to obtain a key point (namely, a contour point) of the first graph, and continuously approximate to a real line of the first graph.

In a possible implementation, to further improve contour point identification accuracy, in this embodiment of this application, the electronic device may further identify the contour points of the first graph based on a variable threshold and the polygonal approximation algorithm. The electronic device may identify preliminary contour points of the first graph based on the polygonal approximation algorithm and a first threshold. After the electronic device identifies the preliminary contour points of the first graph, for two adjacent contour points in the preliminary contour points, the electronic device identifies fine contour points of the first graph based on the polygonal approximation algorithm and a second threshold.

The first threshold is different from the second threshold. In a possible implementation, the first threshold and the second threshold are related to circumference of the first graph.

In this implementation, the electronic device may flexibly set a threshold, so that when the polygon algorithm is used to approximate the first graph, a graph is closer to a real first graph, and accurate contour points of the first graph are obtained.

In a possible implementation, the contour points of the first graph include the preliminary contour points and the fine contour points. The electronic device may detect, based on curvature at the fine contour points, whether a straight line exists in the first graph. A second threshold may be preset in the electronic device. When curvature at all the fine contour points of the first graph is greater than the second threshold, the electronic device may determine that no straight line exists in the first graph. When curvature less than or equal to the second threshold exists in curvature at the fine contour points of the graph, the electronic device may determine that a straight line exists in the first graph. When a straight line exists in the first graph, the electronic device may determine that the first graph is not a to-be-processed object, and may not process the first graph. When no straight line exists in the first graph, the electronic device may process the first graph in the method in this application. For example, the electronic device may determine the type of the first graph based on the contour points of the first graph.

In this implementation, the electronic device may detect, based on the curvature at the fine contour points, whether a straight line exists in the first graph. This can avoid a case in which due to drawing of the user, the electronic device identifies, as a curve graph, a straight-line graph that the user originally intends to draw. The straight-line graph may be understood as a graph including a straight line, and the curve graph may be understood as a graph including a curve.

The following describes a process in which the electronic device determines the type of the first graph based on the contour points of the first graph.

In a possible implementation, when the electronic device obtains the contour points of the first graph, the preliminary contour points and the fine contour points are not distinguished in this example. In this example, the electronic device may determine the type of the first graph based on a quantity of contour points and a distribution of the contour points.

In a possible implementation, when the electronic device obtains the contour points of the first graph based on a variable threshold and the polygonal approximation algorithm, the electronic device may obtain the preliminary contour points and the fine contour points of the first graph. In this example, the electronic device may determine the type of the first graph based on a quantity of the preliminary contour points and a distribution of the preliminary contour points.

The following describes a process in which the electronic device determines the type of the first graph based on the quantity of the preliminary contour points and the distribution of the preliminary contour points.
I. The circular arc and the S-shaped curve have more inflection points than the arc, and therefore the circular arc and the S-shaped curve also have more contour points than the arc. Therefore, when the quantity of the preliminary contour points of the first graph is less than or equal to the first threshold, the electronic device determines that the first graph is an arc. Correspondingly, when the quantity of the preliminary contour points of the first graph is greater than the first threshold, the electronic device determines that the first graph is a circular arc, an S-shaped curve, a circle, or an ellipse.
II. The circular arc, the circle, and the ellipse each correspond to one center of a circle, and the S-shaped curve corresponds to at least two centers of a circle. Therefore, connection lines between contour points of each of the circular arc, the circle, and the ellipse do not cross, and connection lines between contour points of the S-shaped curve cross. Therefore, in this embodiment of this application, when the quantity of the preliminary contour points is greater than the first value, the electronic device may determine, based on whether connection lines between the preliminary contour points cross, whether the first graph is an S-shaped curve, a circular arc, a circle, or an ellipse. When the connection lines between the preliminary contour points cross, the electronic device may determine that the first graph is an S-shaped curve; or when the connection lines between the preliminary contour points do not cross, the electronic device may determine that the first graph is a circular arc, a circle, or an ellipse.

When the quantity of the preliminary contour points is greater than the first threshold and the distribution of the preliminary contour points meets a preset condition, it is determined that the first graph is an S-shaped curve. The preset condition is that a first connection line and a second connection line cross; and the first connection line is a connection line between a first contour point and a fourth contour point, the second connection line is a connection line between a second contour point and a third contour point, and the first contour point, the second contour point, the third contour point, and the fourth contour point are consecutive and sequentially adjacent in the preliminary contour points.

When the quantity of the preliminary contour points is greater than the first threshold and the distribution of the contour points does not meet the preset condition, it is determined that the first graph is a circular arc.

In this implementation, the electronic device may accurately determine the type of the first graph based on features of the arc, the circular arc, and the S-shaped curve and the preliminary contour points of the first graph. In addition, compared with a graph identification method for such as a corner point or an inflection point of the graph, the electronic device identifies the type of the first graph based on the preliminary contour points of the first graph, to avoid an identification error caused by different graph sizes. The graph identification method in this embodiment of this application can achieve same identification accuracy in a case of different sizes.

The following describes processing methods corresponding to different types of graphs:
I. The electronic device may process the S-shaped curve based on a piecewise Bezier algorithm when the type of the first graph includes the S-shaped curve. The electronic device may process a third connection line and a fourth connection line based on a Bezier curve algorithm, so that a second derivative at a crosspoint between the third connection line and the fourth connection line is 0. The third connection line is a connection line between the first contour point and the second contour point, the fourth connection line is a connection line between the second contour point and the third contour point, and the first contour point, the second contour point, and the third contour point are consecutive and sequentially adjacent in the preliminary contour points.

It should be understood that the electronic device may sort the preliminary contour points of the first graph in a clockwise direction or an anticlockwise direction. In this way, an adjacent relationship, a consecutive relationship, and the like between the preliminary contour points can be determined. For example, the preliminary contour points of the first graph include a point D, a point C, and a point E. The electronic device sorts the preliminary contour points of the first graph in the clockwise (or anticlockwise) direction, to obtain a sequence such as the point D, the point C, and the point E. In this way, the point D, the point C, and the point E are consecutive, the point D is adjacent to the point C, and the point C is adjacent to the point E.

In a possible implementation, when the electronic device processes the S-shaped curve and displays the second graph, the electronic device may further display the preliminary contour points on the second graph.

When a user selects a first preliminary contour point in the preliminary contour points, the electronic device may display, on two sides of the first preliminary contour point, a first control point, a second control point, and a line segment used to connect the first control point, the first preliminary contour point, and the second control point. The first control point, the first preliminary contour point, and the second control point are on a straight line.

In some embodiments, the user may adjust the first graph by operating the first preliminary contour point. Correspondingly, the first preliminary contour point is translated in response to an operation of the user on the first preliminary contour point. In this example, the user may operate the first preliminary contour point, to adjust a part of graphs associated with the first preliminary contour point. The part of the graphs associated with the first preliminary contour point belongs to the second graph, and the part of the graphs associated with the first preliminary contour point may be understood as a graph between the first preliminary contour point and a second preliminary contour point in the second graph, and/or a graph between the first preliminary contour point and a third preliminary contour point. It should be understood that both the second preliminary contour point and the third preliminary contour point are adjacent to the first preliminary contour point.

For example, the user selects the first preliminary contour point and performs upward translation, and the electronic device may extend the part of the graphs associated with the first preliminary contour point upward.

In some embodiments, the user may adjust the first graph by operating the first control point or the second control point. Herein, an example in which the user operates the first control point is used for description. Correspondingly, the electronic device may rotate the second control point in response to the operation of the user on the first control point. In this example, the user may select the first control point or the second control point, and adjust, by operating the first control point or the second control point, the part of the graphs associated with the first preliminary contour point. In this embodiment of this application, when the user operates the first control point, the electronic device may rotate the second control point. Similarly, when the user operates the second control point, the electronic device may rotate the second control point.

For example, the user selects the first control point, and moves the first control point upward. Correspondingly, in response to the operation of the user, the electronic device may rotate the second control point downward, and a rotation distance is equal to a movement distance of the first control point. It should be understood that a rotation direction of the second control point is opposite to a rotation direction (including clockwise and anticlockwise) of the first control point, but rotation angles are the same.

II. When the type of the first graph is a non-S-shaped curve, that is, when the type of the first graph is an arc, a circular arc, a circle, or an ellipse, the electronic device may process the first graph based on an elliptic fitting algorithm. When the first graph is a circular arc, a circle, or an ellipse, elliptic fitting processing succeeds. When the first graph is an arc, elliptic fitting processing fails. In this embodiment of this application, the electronic device may process the first graph based on a cubic Bezier algorithm when elliptic fitting processing fails.

In this example, the electronic device may display the second graph when elliptic fitting processing succeeds. In addition, the user may further perform a scaling operation on the second graph. Correspondingly, the second graph is scaled based on an affine transformation algorithm in response to the scaling operation on the second graph.

In this implementation, the electronic device may process different types of graphs in corresponding processing manners, which may improve graph processing accuracy. In addition, the electronic device may further adjust the second graph in a corresponding processing manner in response to an operation such as a moving operation, a rotation operation, or a scaling operation of the user, which may improve user experience.

According to a second aspect, an embodiment of this application provides an electronic device, including a processor and a memory. The memory is configured to store code instructions, and the processor is configured to run the code instructions, to perform the method according to any one of the first aspect or the possible implementations of the first aspect.

According to a third aspect, an embodiment of this application provides a computer-readable storage medium. The computer-readable storage medium stores a computer program or instructions. When the computer program or the instructions are run on a computer, the computer is enabled to perform the method according to any one of the first aspect or the possible implementations of the first aspect.

According to a fourth aspect, an embodiment of this application provides a computer program product including a computer program. When the computer program is run on a computer, the computer is enabled to perform the method according to any one of the first aspect or the possible implementations of the first aspect.

According to a fifth aspect, this application provides a chip or a chip system. The chip or the chip system includes at least one processor and a communication interface. The communication interface and the at least one processor are interconnected through a line, and the at least one processor is configured to run a computer program or instructions, to perform the method according to any one of the first aspect or the possible implementations of the first aspect. The communication interface in the chip may be an input/output interface, a pin, a circuit, or the like.

In a possible implementation, the chip or the chip system described above in this application further includes at least one memory, and the at least one memory stores instructions. The memory may be a storage unit in the chip, for example, a register or a cache, or may be a storage unit (for example, a read-only memory or a random access memory) of the chip.

It should be understood that the technical solutions of the second aspect to the fifth aspect of this application correspond to the technical solutions of the first aspect of this application. Beneficial effects achieved by the aspects and corresponding feasible implementations are similar, and details are not described again.

### BRIEF DESCRIPTION OF DRAWINGS

FIG. 1A is a diagram of a scenario to which a drawing method is applicable according to an embodiment of this application;
FIG. 1B is a diagram of different types of graphs;
FIG. 2 is a diagram of a comparison between a current graph existing before processing and a current graph obtained through processing;
FIG. 3 is a schematic flowchart of an embodiment of a drawing method according to an embodiment of this application;
FIG. 4 is a diagram of a comparison between a graph existing before processing and a graph obtained through processing according to an embodiment of this application;
FIG. 5 is a diagram of processing a first graph based on a polygonal approximation algorithm with a variable threshold according to an embodiment of this application;
FIG. 6A is a diagram of determining a type of a graph according to an embodiment of this application;
FIG. 6B is a schematic flowchart of another embodiment of a drawing method according to an embodiment of this application;
FIG. 7 is a diagram of a comparison between a graph existing before processing and a graph obtained through processing according to an embodiment of this application;
FIG. 8 is a diagram of another comparison between a graph existing before processing and a graph obtained through processing according to an embodiment of this application;
FIG. 9 is a diagram of another comparison between a graph existing before processing and a graph obtained through processing according to an embodiment of this application;
FIG. 10A is a diagram of an adjustment of an S-shaped curve according to an embodiment of this application;
FIG. 10B is a diagram of another adjustment of an S-shaped curve according to an embodiment of this application;
FIG. 11 is a schematic flowchart of another embodiment of a drawing method according to an embodiment of this application; and
FIG. 12 is a diagram of a structure of an electronic device according to an embodiment of this application.

### DESCRIPTION OF EMBODIMENTS

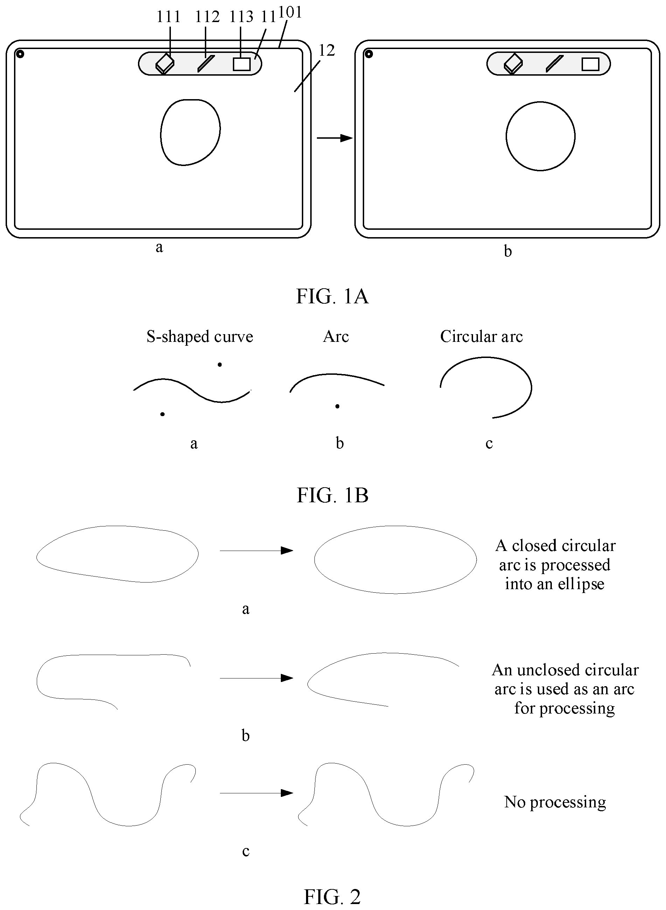

FIG. 1A is a diagram of a scenario to which a drawing method is applicable according to an embodiment of this application. FIG. 1A is described by using an example in which an electronic device is a tablet computer (tablet). A drawing application (application, APP) is deployed in the electronic device, and a user may draw a graph by using the drawing application. The drawing application may be a system application or a third-party application. This is not limited in this embodiment of this application. It should be understood that an interface shown in FIG. 1A does not constitute a limitation on an interface of the drawing application.

As shown in a in FIG. 1A, a drawing interface 101 of the drawing application may include a menu area 11 and a drawing area 12. For example, the user may draw a graph in the drawing area 12 by using a medium such as a finger, a joint, or a stylus. The medium used by the user to draw the graph is not limited in this embodiment of this application. "The user draws the graph in the drawing area" or "the user draws the graph" described in the following embodiments may be understood as that the user draws the graph in the drawing area by using the medium such as the finger, the joint, or the stylus. In some embodiments, the stylus may be referred to as a handwriting pen.

The menu area 11 may include at least one identifier, and each identifier corresponds to a different function. For example, the function may include but is not limited to an eraser function, a paintbrush function, or a graph function. The eraser function is used to erase content in the drawing area 12. The paintbrush function is used to provide different types of paintbrushes. For example, the paintbrush may include but is not limited to a pencil, an ink brush, an oil paintbrush, or a crayon. The graph function is used to provide different shapes. For example, the shape may include but is not limited to a square, a rectangle, a circle, an ellipse, or a triangle.

It should be understood that this embodiment of this application mainly involves a scenario in which the user draws the graph by using the paintbrush function.

It should be understood that in a in FIG. 1A, that the menu area 11 is located at an upper part in the drawing interface 101 is used as an example. For example, the menu area 11 may include an identifier 111 of the eraser function, an identifier 112 of the paintbrush function, and an identifier 113 of the graph function. In some embodiments, different functions in the menu area 11 may be arranged at different locations in the drawing interface 101. For example, the paintbrush function may be arranged on a left side in the drawing interface 101, and the eraser function, the graph function, and the like may be arranged at an upper part in the drawing interface 101. An arrangement of the menu area 11 is not limited in this embodiment of this application.

In some embodiments, the drawing interface 101 may further include other content, for example, a close control or a save control. This is not limited in this embodiment of this application.

As shown in a in FIG. 1A, the user draws a circle in the drawing area 12, and the circle is not a standard circle. To better display the graph drawn by the user, the electronic device may process the graph drawn by the user, to obtain a standard circle. After processing is completed, the electronic device may display the standard circle, as shown in b in FIG. 1A.

For example, the user draws the graph in the drawing area by using the stylus. In some embodiments, the electronic device may process the circle in a process in which the user draws the circle, and display the standard circle when the user lifts a pen. Alternatively, in some embodiments, the electronic device may process the graph after the user draws the circle and lifts a pen, and display the standard circle.

In this embodiment of this application, an occasion at which the electronic device processes the graph and displays a processed graph is not limited. This embodiment of this application mainly involves improvement to a graph processing method.

For ease of understanding, the following describes related terms and concepts in embodiments of this application.
1. A graph includes a point, a line, a shape including a point and/or a line, and the like. For example, the shape may include but is not limited to a circle, an ellipse, a rectangle, or a triangle.
2. S-shaped curve: In embodiments of this application, the S-shaped curve corresponds to at least two centers of a circle. For example, a sine line, a cosine line, and a wave line all are S-shaped curves. For the S-shaped curve, refer to a in FIG. 1B. In a in FIG. 1B, a black dot is used to represent a center of a circle corresponding to the S-shaped curve.
3. Arc: In embodiments of this application, the arc corresponds to a center of a circle. For example, a parabola is an arc. For the arc, refer to b in FIG. 1B. In b in FIG. 1B, a black dot is used to represent a center of a circle corresponding to the arc.
4. Circular arc: An unclosed line, of a circle or an ellipse, that exceeds 1/2 of circumference may be considered as a circular arc. For the circular arc, refer to c in FIG. 1B. In some embodiments, an unclosed line, of a circle or an ellipse, that does not exceed 1/2 of the circumference or is equal to 1/2 of the circumference may be considered as an arc.
   It should be understood that FIG. 1B shows a smooth S-shaped curve, a smooth arc, and a smooth circular arc. In an actual drawing process, a graph drawn by a user may be unsmooth and has a sharp corner.
5. An electronic device in embodiments of this application may be referred to as user equipment (user equipment, UE), a terminal (terminal), or the like. The electronic device in embodiments of this application may provide a drawing function, and the drawing function may be provided by a system app or a third-party app in the electronic device. For example, the electronic device may be a mobile phone, a tablet computer, a personal digital assistant (personal digital assistant, PDA), a vehicle-mounted device or a wearable device, a virtual reality (virtual reality, VR) terminal device, an augmented reality (augmented reality, AR) terminal device, a wireless terminal in industrial control (industrial control), or a wireless terminal in smart home (smart home). A form of the electronic device is not specifically limited in embodiments of this application.

For an electronic device carrying a stylus, the electronic device and the stylus may be interconnected via a communication network, to implement graph drawing. For example, the communication network may be but is not limited to a Wi-Fi hotspot network, a Wi-Fi peer-to-peer (peer-to-peer, P2P) network, a Bluetooth network, a ZigBee network, or a near field communication (near field communication, NFC) network.

The following first describes an existing graph processing method.

### 1. Arc

An electronic device may perform fitting on the arc based on a spline interpolation algorithm or a Bezier algorithm.

In some embodiments, the spline interpolation algorithm may be, for example, a catmull-rom spline interpolation algorithm. A basic principle of the catmull-rom spline interpolation algorithm is as follows: Control points Pᵢ₋₁, Pᵢ, and Pᵢ₊₁ are selected on an arc drawn by a user. Processing based on the algorithm ensures the following two points:
(1) A first derivative at the control point Pᵢ is equal to "a first derivative at the control point Pᵢ₊₁ minus a first derivative at the control point Pᵢ₋₁". In other words, a tangent vector at the control point Pᵢ is parallel to a tangent vector of a connection line between the control point Pᵢ₊₁ and the control point Pᵢ₋₁.
(2) A fitted arc passes through all control points Pᵢ.

However, a disadvantage of the catmull-rom spline interpolation algorithm is that curvature of a part of a graph cannot be adjusted, a processed arc may be sharp, or another problem.

Currently, a principle of performing fitting on the arc by the electronic device based on the Bezier algorithm is as follows: performing first-order Bezier algorithm processing one time or second-order Bezier algorithm processing one time on all control points on the arc. A fitted arc is also sharp or unsmooth.

### 2. Closed graph such as a circle and an ellipse

An electronic device may first determine whether a graph drawn by a user is closed. A shown in a in FIG. 2, in a scenario in which the graph is closed, the electronic device may calculate a major axis and a minor axis of the graph based on a central point, to perform circle or elliptic fitting processing on the graph.

However, in a current method, if the user draws a circular arc that exceeds 1/2 of circumference of the circle or the ellipse, the graph is not closed. In a scenario in which the graph is not closed, currently, the electronic device uses, as an arc for processing, the circular arc drawn by the user, to obtain a sharp and unsmooth line, as shown in b in FIG. 2.

### 3. S-shaped curve

In a current graph processing method, there is no processing method for the S-shaped curve. As shown in c in FIG. 2, a user draws an unsmooth S-shaped curve. An electronic device does not process the S-shaped curve, and the electronic device still displays the unsmooth S-shaped curve.

In conclusion, the current graph processing method has the following problems:
1. There is no processing method for the S-shaped curve.
2. Arc processing accuracy is low, and a processed arc still has problems such as sharpness and unsmoothness.
3. The circular arc is processed in the processing method for the arc, to fit a sharp and unsmooth line. Consequently, a fitting processing error is caused.

In view of the foregoing problems, an embodiment of this application provides a drawing method. In the method, after a user draws a graph, an electronic device may identify contour points of the graph, and further identify a type of the graph based on the contour points of the graph. For example, the electronic device may identify that the graph is of a type such as an arc, an S-shaped curve, and a circular arc. After the electronic device identifies the type of the graph, the electronic device may process the graph in a processing method corresponding to the type, to obtain a graph with a smooth line. In this embodiment of this application, the electronic device may identify the S-shaped curve, the circular arc, and the arc. In this way, a problem that the S-shaped curve cannot be processed and the circular arc is used as an arc for processing in a conventional technology is resolved, and processing accuracy is high. In addition, for different types of graphs, processing methods corresponding to the different types of graphs are set in this embodiment of this application. In this way, graph processing accuracy is higher, and a processed graph is smoother and more standard.

In the following embodiments, a method in which an electronic device processes an arc, an S-shaped curve, and a circular arc is described. It should be understood that the drawing method provided in this embodiment of this application is also applicable to a scenario of processing a graph such as a circle or an ellipse. For details, refer to descriptions in the following embodiments.

The drawing method provided in embodiments of this application is described below with reference to specific embodiments. The following several embodiments may be combined with each other, and a same or similar concept or process may not be described repeatedly in some embodiments.

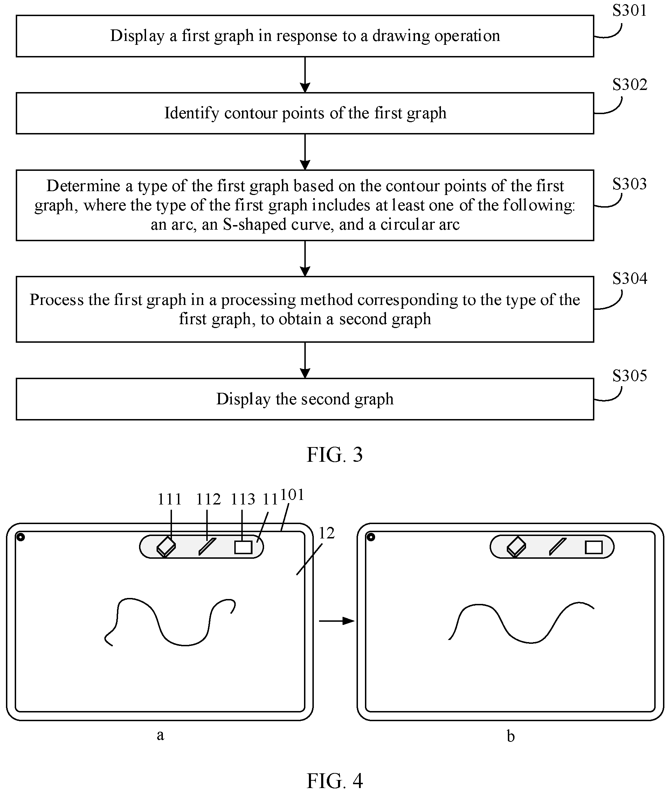

FIG. 3 is a schematic flowchart of an embodiment of a drawing method according to an embodiment of this application. As shown in FIG. 3, the drawing method provided in this embodiment of this application may include the following steps.

S301: Display a first graph in response to a drawing operation.

Based on a scenario shown in FIG. 1A, a user may draw a graph. Correspondingly, an electronic device may display the first graph in response to the drawing operation of the user.

For example, the user draws an S-shaped curve. As shown in a in FIG. 4, the user draws the S-shaped curve in a drawing area 12, and the electronic device may display the S-shaped curve. It should be understood that, for ease of obtaining, through a comparison, a difference between the S-shaped curve existing before processing and an S-shaped curve obtained through processing, an example in which the S-shaped curve includes an unsmooth line and a sharp corner is used in a in FIG. 4.

S302: Identify contour points of the first graph.

The contour points may be arranged along the first graph in a clockwise direction or an anticlockwise direction, and the contour points may represent a set shape of the graph. In this embodiment of this application, an objective of identifying the contour points of the first graph by the electronic device is to identify a type of the first graph. For example, a type of the graph may include but is not limited to an arc, an S-shaped curve, a circular arc, a circle, or an ellipse. The type of the first graph may include at least one of the following: the arc, the S-shaped curve, and the circular arc. It should be understood that this embodiment of this application mainly involves identification and processing of the arc, the S-shaped curve, and the circular arc. However, a display method provided in this embodiment of this application may be applied to the circle and the ellipse. In some embodiments, the type of the first graph may include at least one of the following: the arc, the S-shaped curve, the circular arc, the circle, and the ellipse.

The following describes a method in which the electronic device identifies the contour points of the first graph.

### Method 1:

In some embodiments, different types of standard graphs may be preset in the electronic device, and the standard graph corresponds to preset contour points. For example, the electronic device stores a standard arc and distribution information of N contour points corresponding to the arc on the arc. The distribution information indicates a relative location of each of the N contour points relative to a start point (or an end point) of the arc. For example, the electronic device stores a standard S-shaped curve and distribution information of M contour points corresponding to the S-shaped curve on the arc. The distribution information indicates a relative location of each of the M contour points relative to a start point (or an end point) of the arc. For example, the electronic device stores a standard circular arc and distribution information of X contour points corresponding to the circular arc on the arc. The distribution information indicates a relative location of each of the X contour points relative to a start point (or an end point) of the arc. N, M, and X are integers greater than or equal to 2, N is different from M, N is different from X, and M and X may be the same or different.

For example, the electronic device stores a standard circle, a standard ellipse, distribution information of Y contour points corresponding to the standard circle on the arc, and distribution information of Z contour points corresponding to the standard ellipse on the arc. For the distribution information, refer to related descriptions of the circular arc. Y and Z are integers greater than or equal to 2, M, X, Y, and Z may be the same or different, N is different from Y, and N is different from Z.

In this embodiment, the electronic device may match the first graph with each standard graph stored in the electronic device, and the electronic device may identify the contour points of the first graph based on contour points of a standard graph with a highest matching degree. For ease of description, the standard graph with the highest matching degree may be referred to as a target standard graph, and the electronic device may use a quantity of contour points of the target standard graph as a quantity of contour points of the first graph. In addition, the electronic device may further use a point at a corresponding relative location relative to a start point (or an end point) of the first graph in the first graph as the contour point of the first graph based on a relative location of a contour point of the target standard graph relative to a start point (or an end point) of the target standard graph.

For example, the target standard graph with the highest matching degree with the first graph is an S-shaped curve, the target standard graph includes six contour points, and the electronic device stores a relative location of each contour point relative to the start point (or the end point) of the target standard graph. For example, a relative location of a contour point 1 relative to the start point is a relative location 1, a relative location of a contour point 2 relative to the start point is a relative location 2, a relative location of a contour point 3 relative to the start point is a relative location 3, a relative location of a contour point 4 relative to the start point is a relative location 4, a relative location of a contour point 5 relative to the start point is a relative location 5, and a relative location of a contour point 6 relative to the start point is a relative location 6. In this way, the electronic device may determine, based on the target standard graph, that there are six contour points of the first graph, and the six contour points of the first graph are respectively at the relative location 1, the relative location 2, the relative location 3, the relative location 4, the relative location 5, and the relative location 6 relative to the start point of the first graph.

### Method 2:

To avoid a problem of a matching failure or poor matching accuracy, in some embodiments, the electronic device may identify the contour points of the first graph based on a polygonal approximation algorithm. The polygonal approximation algorithm is a method in which a non-key point in the first graph is deleted through infinite approximation to a line of the first graph, to obtain a key point (namely, a contour point) of the first graph, and continuously approximate to a real line of the first graph.

### Method 3:

In some embodiments, to further improve contour point identification accuracy, in this embodiment of this application, the electronic device may further identify the contour points of the first graph based on a variable threshold and the polygonal approximation algorithm. In the method, the electronic device may flexibly set a threshold, so that when the polygon algorithm is used to approximate the first graph, a graph is closer to a real first graph, and accurate contour points of the first graph are obtained.

In this embodiment of this application, the electronic device may preset different proportions. The electronic device may determine different thresholds corresponding to the polygonal approximation algorithm based on the different proportions and circumference of the first graph. For example, the electronic device may determine a first threshold and a second threshold based on the different proportions and the circumference of the first graph. In other words, the first threshold and the second threshold are related to the circumference of the first graph. For example, the preset proportions may be 0.7 and 0.5, and the electronic device may calculate a first product value of the circumference and the proportion (0.7), and a second product value of the circumference and the proportion (0.5).

The electronic device may determine the first threshold based on the first product value. In some embodiments, the electronic device stores a mapping relationship between a product value and a threshold. The mapping relationship may be a table, a formula, or the like. Based on this, the electronic device may determine the first threshold based on the first product value and the mapping relationship between a product value and a threshold. Similarly, the electronic device may determine the second threshold based on the second product value and the mapping relationship between a product value and a threshold.

After the electronic device determines the first threshold and the second threshold, in this embodiment of this application, the electronic device may identify preliminary contour points of the first graph based on the polygonal approximation algorithm and the first threshold. In addition, after the electronic device identifies the preliminary contour points, the electronic device may further adjust the threshold to the second threshold, to further identify the contour points of the first graph. For two adjacent contour points in the preliminary contour points, the electronic device may continue to identify fine contour points of the first graph based on the polygonal approximation algorithm and the second threshold. In this embodiment of this application, the first threshold is different from the second threshold.

In this embodiment of this application, a specific process and a principle of the polygonal approximation algorithm are not described in detail. For details, refer to descriptions of the current polygonal approximation algorithm. With reference to specific examples, the following briefly describes a process in which the electronic device identifies the contour points of the first graph based on a variable threshold and the polygonal approximation algorithm in this embodiment of this application.

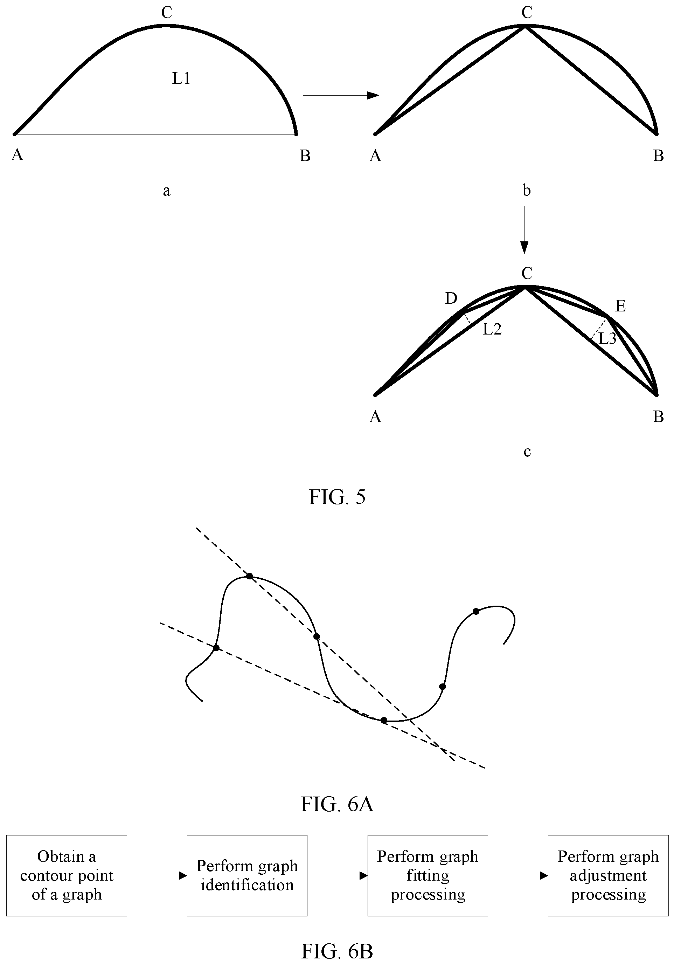

As shown in a in FIG. 5, the arc is used as an example. The electronic device determines a start point A and an end point B of the arc, and then connects the start point A and the end point B, to form a line segment AB. The electronic device may search for a point C that is on the arc and that is farthest from the line segment AB, and calculate a distance L1 from the point C to the line segment AB. If the distance L1 is less than the first threshold, the line segment AB is used to replace the arc. If the distance L1 is greater than or equal to the first threshold, the electronic device may connect AC and BC, to obtain a line segment AC and a line segment BC, as shown in b in FIG. 5. The point C may be used as a contour point of the arc.

It should be understood that, in FIG. 5, one time of polygonal approximation is used as an example to describe a process in which the electronic device obtains contour points of the arc. According to the method, the electronic device may perform polygonal approximation a plurality of times based on the first threshold, to obtain at least one contour point of the arc. It should be understood that, in each polygonal approximation process, a distance from a contour point to a line segment (for example, the line segment AC or the line segment BC) is greater than or equal to the first threshold. In this embodiment of this application, the contour point that is of the first graph and that is determined by the electronic device based on the first threshold may be used as a preliminary contour point.

It may be understood that, in a polygonal approximation process, distances from the contour point to the line segment may be all less than the first threshold. In this scenario, for two adjacent contour points in the preliminary contour points, the electronic device may identify the fine contour points of the first graph based on the polygonal approximation algorithm and the second threshold.

For example, for the line segment AC, the electronic device may search for a point D that is on the arc and that is farthest from the line segment AC, and calculate a distance L2 from the point D to the line segment AC. If the distance L2 is greater than or equal to the first threshold, the electronic device may connect AD and CD, to obtain a line segment AD and a line segment CD, as shown in c in FIG. 5. In addition, for the line segment BC, the electronic device may search for a point E that is on the arc and that is farthest from the line segment BC, and calculate a distance L3 from the point E to the line segment BC. If the distance L3 is greater than or equal to the first threshold, the electronic device may connect BE and CE, to obtain a line segment BE and a line segment CE, as shown in c in FIG. 5. The point B and the point E may be used as contour points of the arc.

In this way, the electronic device may continuously perform iteration of polygonal approximation based on the first threshold until distances from a farthest point to the line segment are all less than the first threshold in the polygonal approximation process, and the electronic device may use obtained contour points as preliminary contour points of the first graph. For example, the preliminary contour points may include the point C, the point D, and the point E.

In this embodiment of this application, after the electronic device identifies the preliminary contour points of the first graph, the electronic device may further adjust the threshold to the second threshold, to further identify finer contour points of the first graph. An objective is as follows: When drawing the first graph, the user originally wants to draw a straight line or a graph including the straight line. However, during drawing, due to reasons such as a drawing jitter and unfamiliarity with drawing, a straight line in the drawn graph becomes an arc or a curve. In this way, the electronic device may identify a straight-line part in the graph as an arc or a curve for processing, thereby causing a processing abnormality.

When the user wants to draw the straight line or the graph including the straight line, the graph drawn by the user may include a straight line. In this embodiment of this application, the electronic device identifies finer contour points of the first graph, to identify whether the first graph includes a straight line. If there is a straight line in the first graph, the electronic device may determine that the user wants to draw a graph including a straight line, and the drawing method in this application is not used. If there is no straight line in the first graph, and the first graph includes merely an arc or a curve, the electronic device may process the first graph in the drawing method in this application. In this way, a problem of a processing abnormality can be avoided, and graph processing accuracy can be improved.

In this embodiment of this application, for two adjacent contour points in the preliminary contour points, the electronic device may identify the fine contour points of the first graph based on the polygonal approximation algorithm and the second threshold. It should be understood that, in some embodiments, after obtaining the preliminary contour points, the electronic device may sort the preliminary contour points along the first graph in a clockwise direction or an anticlockwise direction. For example, as shown in FIG. 5, for example, the preliminary contour points of the arc include the point D, the point C, and the point E. The electronic device sorts the preliminary contour points of the first graph in the clockwise direction, to obtain a sequence such as the point D, the point C, and the point E. Two adjacent contour points in the preliminary contour points may be the point D and the point C, and the point C and the point E.

The electronic device may use two adjacent contour points in the preliminary contour points as the start point and the end point of the arc respectively. The electronic device connects the start point and the end point, to obtain a line segment. In this way, the electronic device may identify the contour points of the arc based on the polygonal approximation algorithm and the second threshold. For details, refer to descriptions of identifying the preliminary contour points in FIG. 5. In some embodiments, the contour points that are of the first graph and that are determined by the electronic device based on the second threshold may be used as fine contour points.

It should be understood that for functions of the preliminary contour point and the fine contour point, refer to descriptions in S303.

S303: Determine the type of the first graph based on the contour points of the first graph, where the type of the first graph includes at least one of the following: an arc, an S-shaped curve, and a circular arc.

The type of the graph may include but is not limited to the arc, the S-shaped curve, the circular arc, the circle, or the ellipse. This embodiment of this application mainly involves the arc, the S-shaped curve, and the circular arc, but also describes a processing method for the circle and the ellipse. In some embodiments, the user may draw one type of graph at a time, or the user may perform continuous drawing. In this way, the user may draw a plurality of types of graphs at a time. In this embodiment of this application, the type of the first graph includes at least one of the following: the arc, the S-shaped curve, and the circular arc.

The following describes a method in which the electronic device determines the type of the first graph.

### Manner 1:

In some embodiments, in the method in S302, the electronic device may use a type of the target standard graph as at least one type to which the first graph belongs.

It should be understood that, because there is a case in which the first graph includes a plurality of types of graph, in S302, when identifying the contour points of the first graph, the electronic device may match each standard graph with the first graph. In a possible scenario, for example, a part of graphs in the first graph matches a first standard graph, a remaining part of the graphs in the first graph matches a second standard graph, and the first standard graph is different from the second standard graph. In this way, a part of the graphs in the first graph is of a type of the first standard graph, and a remaining part of the graphs is of a type of the second standard graph. In this way, in the method in S302, the electronic device can identify the at least one type of the first graph.

In this embodiment of this application, after identifying the contour points of the first graph, the electronic device may determine the type of the first graph based on the contour points of the first graph.

### Manner 2:

In some embodiments, when the electronic device identifies the contour points of the first graph based on the polygonal approximation algorithm, the electronic device may determine the type of the first graph in the following method:
In this embodiment, the electronic device may determine the type of the first graph based on a quantity of contour points and a distribution of the contour points. The distribution of the contour points indicates whether connection lines of the contour points cross. For details, refer to the following descriptions in Manner 3.
(1) When the quantity of contour points is less than or equal to the first threshold, the electronic device may determine that the first graph is an arc.
(2) When the quantity of contour points is greater than the first threshold and the distribution of the contour points meets a preset condition, the electronic device may determine that the first graph is an S-shaped curve.
   The preset condition is that a first connection line and a second connection line cross. The first connection line is a connection line between a first contour point and a fourth contour point, the second connection line is a connection line between a second contour point and a third contour point, and the first contour point, the second contour point, the third contour point, and the fourth contour point are consecutive and sequentially adjacent in the contour points.
(3) When the quantity of contour points is greater than the first threshold and the distribution of the contour points does not meet a preset condition, the electronic device may determine that the first graph is a circular arc.

It should be understood that the contour points of the first graph that are identified by the electronic device in Manner 2 do not include a fine contour point, and the contour point in Manner 2 may be considered as a preliminary contour point in Manner 3. For a method in which the electronic device determines the type of the first graph based on the contour points of the first graph in (1) to (3) in Manner 2, refer to descriptions in (1) to (3) in Manner 3.

### Manner 3:

In some embodiments, when the electronic device identifies the contour points of the first graph based on the polygonal approximation algorithm and a variable threshold, the electronic device may determine the type of the first graph in the following method:
In this embodiment of this application, the contour points of the first graph include the preliminary contour points and the fine contour points. The electronic device may detect, based on curvature at the fine contour points, whether a straight line exists in the first graph. A second threshold may be preset in the electronic device. When curvature at all the fine contour points of the first graph is greater than the second threshold, the electronic device may determine that no straight line exists in the first graph. When curvature less than or equal to the second threshold exists in curvature at the fine contour points of the graph, the electronic device may determine that a straight line exists in the first graph.

When a straight line exists in the first graph, the electronic device may determine that the first graph is not a to-be-processed object, and may not process the first graph. When no straight line exists in the first graph, the electronic device may process the first graph in the method in this application.

In this embodiment of this application, when no straight line exists in the first graph, the electronic device may determine the type of the first graph based on the contour points of the first graph. Specifically, the electronic device may determine the type of the first graph based on a quantity of the preliminary contour points and a distribution of the preliminary contour points. The distribution of the preliminary contour points indicates whether connection lines of the preliminary contour points cross. For details, refer to descriptions in the following embodiments.

The circular arc and the S-shaped curve have more inflection points than the arc, and therefore the circular arc and the S-shaped curve also have more contour points than the arc.
(1) When the quantity of the preliminary contour points is less than or equal to the first threshold, the electronic device determines that the first graph is an arc.

In this embodiment of this application, the first threshold may be preset. When the quantity of the preliminary contour points is less than or equal to the first threshold, the electronic device may determine that the first graph is an arc. Correspondingly, when the quantity of the preliminary contour points is greater than the first threshold, the electronic device may determine that the first graph is a circular arc or an S-shaped curve.

It may be understood that because the circle and the ellipse have more inflection points than the arc, the circle and the ellipse also have more contour points than the arc. In some embodiments, when the quantity of the preliminary contour points is greater than the first threshold, the electronic device may determine that the first graph is a circular arc, an S-shaped curve, a circle, or an ellipse. When the quantity of the preliminary contour points is less than the first threshold, the electronic device may determine that the first graph is an arc.

(2) When the quantity of the preliminary contour points is greater than the first threshold and the distribution of the preliminary contour points meets a preset condition, the electronic device may determine that the first graph is an S-shaped curve.

The circular arc, the circle, and the ellipse each correspond to one center of a circle, and the S-shaped curve corresponds to at least two centers of a circle. Therefore, connection lines between contour points of each of the circular arc, the circle, and the ellipse do not cross, and connection lines between contour points of the S-shaped curve cross. Therefore, in this embodiment of this application, when the quantity of the preliminary contour points is greater than the first value, the electronic device may determine, based on whether connection lines between the preliminary contour points cross, whether the first graph is an S-shaped curve, a circular arc, a circle, or an ellipse. When the connection lines between the preliminary contour points cross, the electronic device may determine that the first graph is an S-shaped curve; or when the connection lines between the preliminary contour points do not cross, the electronic device may determine that the first graph is a circular arc, a circle, or an ellipse.

In this embodiment of this application, the first graph includes a plurality of contour points. For every four adjacent contour points, the electronic device may connect the four contour points, and determine the type of the first graph based on a result of whether connection lines cross. For example, the first graph includes eight contour points. The eight contour points are sequentially a contour point 1, a contour point 2, a contour point 3, a contour point 4, a contour point 5, a contour point 6, a contour point 7, and a contour point 8. The contour point 1, the contour point 2, the contour point 3, the contour point 4, the contour point 5, the contour point 6, the contour point 7, and the contour point 8 are in a sequence obtained by the electronic device through sorting in a clockwise direction or an anticlockwise direction. The contour point 1, the contour point 2, the contour point 3, the contour point 4, the contour point 5, the contour point 6, the contour point 7, and the contour point 8 are consecutive and sequentially adjacent. For example, the contour point 1 is adjacent to the contour point 2, and the contour point 2 is adjacent to the contour point 3. The four adjacent contour points of the first graph are, for example, "the contour point 1, the contour point 2, the contour point 3, and the contour point 4", "the contour point 2, the contour point 3, the contour point 4, and the contour point 5", "the contour point 3, the contour point 4, the contour point 5, and the contour point 6", ..., and "the contour point 5, the contour point 6, the contour point 7, and the contour point 8".

For example, the four contour points are "the contour point 1, the contour point 2, the contour point 3, and the contour point 4". The contour point 1 may be used as the first contour point, the contour point 2 may be used as the second contour point, the contour point 3 may be used as the third contour point, and the contour point 4 may be used as the fourth contour point. The electronic device may connect the contour point 1 and the contour point 4, to obtain the first connection line, and the electronic device may connect the contour point 2 and the contour point 3, to obtain the second connection line. When the first connection line and the second connection line cross, the electronic device may determine that the first graph is an S-shaped curve; or when the first connection line and the second connection line do not cross, the electronic device may determine that the first graph is a circular arc, a circle, or an ellipse.

It should be understood that, for each adjacent contour point, the electronic device may connect the four contour points. When the first connection line and the second connection line cross, the electronic device may determine that the first graph is an S-shaped curve, as shown in FIG. 6A. When all first connection lines and all second connection lines do not cross, the electronic device may determine that the first graph is a circular arc, a circle, or an ellipse.

In some embodiments, in other words, when the quantity of the preliminary contour points is greater than the first threshold and the distribution of the preliminary contour points meets the preset condition, the electronic device may determine that the first graph is an S-shaped curve. The preset condition is that the first connection line and the second connection line cross; and the first connection line is the connection line between the first contour point and the fourth contour point, the second connection line is the connection line between the second contour point and the third contour point, and the first contour point, the second contour point, the third contour point, and the fourth contour point are consecutive and sequentially adjacent in the preliminary contour points.

(3) When the quantity of the preliminary contour points is greater than the first threshold and the distribution of the contour points does not meet a preset condition, the electronic device determines that the first graph is a circular arc.

It should be understood that, for (3), refer to descriptions in (2).

S304: Process the first graph in a processing method corresponding to the type of the first graph, to obtain a second graph.

In this embodiment of this application, different processing methods are set for different types of graphs. In this way, the processing method is more adapted to the first graph, and processing accuracy can be improved. For processing methods corresponding to different types of graphs, refer to descriptions in the following embodiments.

S305: Display the second graph.

The electronic device processes the first graph, to obtain the second graph; and displays the second graph.

For example, as shown in b in FIG. 4, after processing the first graph drawn by the user, the electronic device may obtain the second graph, and then display the second graph. Compared with an unsmooth S-shaped curve with a sharp corner, a processed S-shaped curve has a smoother line and does not have a sharp corner.

In conclusion, as shown in FIG. 6B, the drawing method provided in this embodiment of this application includes the following steps.

Step 1: Obtain contour points of a graph.

For step 1, refer to the descriptions in S302.

Step 2: Perform graph identification.

For step 2, refer to the descriptions in S303.

Step 3: Perform graph fitting processing.

For step 3, refer to the descriptions in S304.

Step 4: Perform graph adjustment processing.

It should be understood that step 1 to step 4 are described in the embodiment shown in FIG. 3. For step 4, refer to descriptions in Manner 1 and Manner 2 in the following embodiments.

In this embodiment of this application, the electronic device may identify the contour points of the graph, and further identify the type of the graph based on the contour points of the graph. For example, the electronic device may identify that the graph is of a type such as an arc, an S-shaped curve, and a circular arc. After the electronic device identifies the type of the graph, the electronic device may process the graph in a processing method corresponding to the type, to obtain a graph with a smooth line. In this embodiment of this application, the electronic device may identify the S-shaped curve, the circular arc, and the arc. In this way, a problem that the S-shaped curve cannot be processed and the circular arc is used as an arc for processing in a conventional technology is resolved, and processing accuracy is high. In addition, for different types of graphs, processing methods corresponding to the different types of graphs are set in this embodiment of this application. In this way, graph processing accuracy is higher, and a processed graph is smoother and more standard.

The following describes processing methods for different types of graphs in detail:

### (1) S-shaped curve

In some embodiments, an electronic device may process an S-shaped curve based on a piecewise Bezier algorithm when a type of a first graph is the S-shaped curve. In some embodiments, the electronic device may process an S-shaped curve part based on a piecewise Bezier algorithm when a type of a first graph includes an S-shaped curve.

The following describes the piecewise Bezier algorithm in detail:

For every three adjacent contour points of the first graph, the electronic device may connect every two adjacent contour points, and process a second derivative at a crosspoint between connection lines, to process the S-shaped curve. For example, the S-shaped curve includes six contour points: a contour point 1, a contour point 2, a contour point 3, a contour point 4, a contour point 5, and a contour point 6. A first contour point, a second contour point, and a third contour point are consecutive and sequentially adjacent. For example, three adjacent contour points may include "the contour point 1, the contour point 2, and the contour point 3", "the contour point 2, the contour point 3, and the contour point 4", "the contour point 3, the contour point 4, and the contour point 5", and "the contour point 4, the contour point 5, and the contour point 6".

For example, the three adjacent contour points are "the contour point 1, the contour point 2, and the contour point 3". The contour point 1 may be considered as the first contour point, the contour point 2 may be considered as the second contour point, and the contour point 3 may be considered as the third contour point. The electronic device may connect the first contour point and the second contour point, to obtain a third connection line, and the electronic device may connect the second contour point and the third contour point, to obtain a fourth connection line. The electronic device may process the third connection line and the fourth connection line based on a Bezier curve algorithm, so that a second derivative at a crosspoint between the third connection line and the fourth connection line is 0.

It may be understood that, for every three adjacent contour points, the electronic device may perform processing based on a piecewise Bezier algorithm. In this way, after processing all the contour points, the electronic device may complete processing on the first graph.

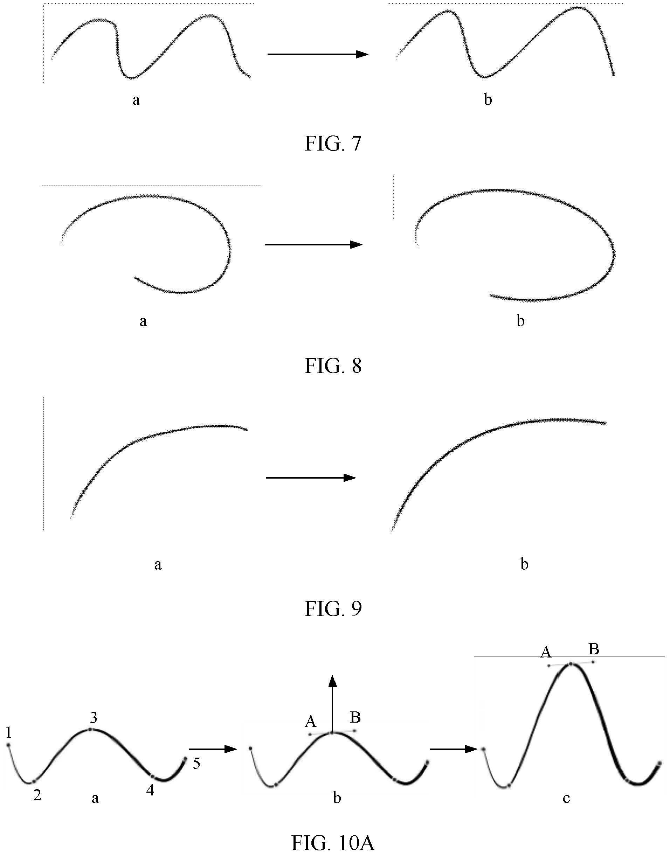

For example, a in FIG. 7 shows an S-shaped curve existing before processing, and b in FIG. 7 shows an S-shaped curve obtained through processing. The S-shaped curve obtained through processing is smoother than the S-shaped curve existing before processing.

### (2) Arc, circular arc, circle, and ellipse

In this embodiment of this application, a type of a first graph may include an S-shaped curve, an arc, a circular arc, a circle, and an ellipse. In addition to the S-shaped curve, the type of the first graph may be the arc, the circular arc, the circle, and the ellipse. In some embodiments, the arc, the circular arc, the circle, and the ellipse may be referred to as non-S-shaped curves. In this embodiment of this application, when the type of the first graph is a non-S-shaped curve, the electronic device may process the first graph based on an elliptic fitting algorithm.

Elliptic fitting processing may be understood as follows: For contour points on the first graph, an ellipse is searched for, so that the ellipse is as close to the contour points as possible. In other words, the contour points on the first graph are fitted by using an elliptic equation as a model, so that an elliptic equation satisfies such data as much as possible.

For first graphs of types of the circular arc, the circle, and the ellipse, the electronic device may successfully perform fitting processing based on the elliptic fitting algorithm. When elliptic fitting processing succeeds, the electronic device may obtain a fitted graph. For example, a in FIG. 8 shows a circular arc existing before processing, and b in FIG. 8 shows a circular arc obtained through processing.

For the first graph of the type of the arc, because a line of the circular arc is too short, the electronic device unsuccessfully performs elliptic fitting processing based on the elliptic fitting algorithm. The electronic device may process the first graph based on a cubic Bezier algorithm when elliptic fitting processing fails. The cubic Bezier algorithm is not described in detail in this embodiment of this application. For details, refer to descriptions in an existing cubic Bezier algorithm. For example, a in FIG. 9 shows an arc existing before processing, and b in FIG. 9 shows an arc obtained through processing.

In this embodiment of this application, for different types of graphs, processing methods corresponding to the different types of graphs are set in this embodiment of this application. In this way, graph processing accuracy is higher, and a processed graph is smoother and more standard.

A graph fitting processing method is described in the foregoing embodiments. An embodiment of this application further provides a drawing method. After graph processing, an electronic device may adaptively adjust a graph based on an operation of a user. In other words, after displaying a second graph, the electronic device adjusts the second graph in response to the operation of the user.

### Manner 1:

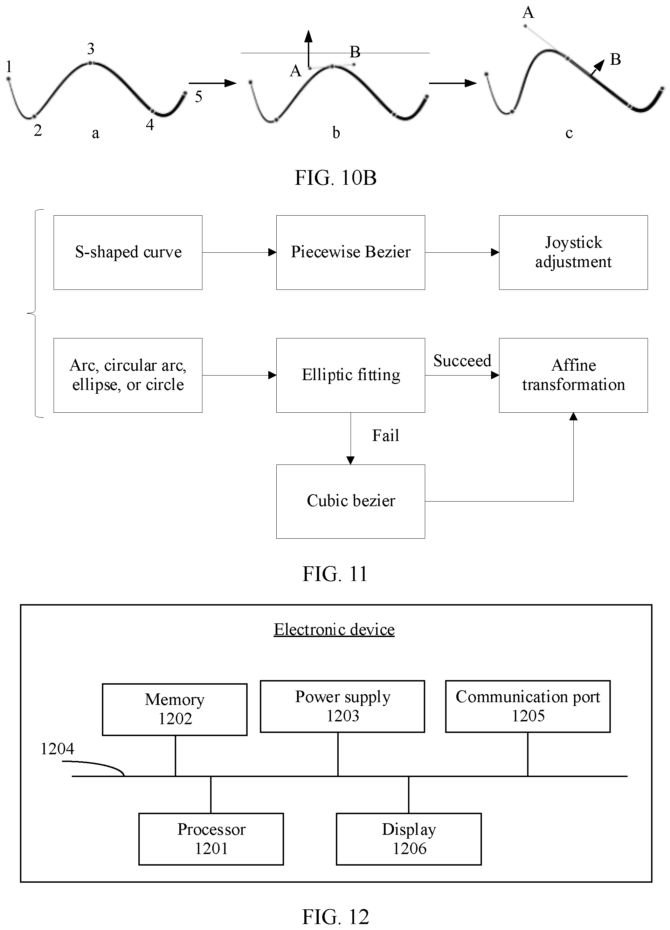

When a first graph includes an S-shaped curve, when displaying an S-shaped curve obtained through processing, that is, the second graph, the electronic device may display preliminary contour points on the second graph. In this embodiment of this application, an objective of displaying the preliminary contour points on the second graph by the electronic device is to help the user adjust the S-shaped curve. For example, as shown in a in FIG. 10A, there are five preliminary contour points of the S-shaped curve: a contour point 1, a contour point 2, a contour point 3, a contour point 4, and a contour point 5.

When the user selects a first preliminary contour point in the preliminary contour points, the electronic device may display, on two sides of the first preliminary contour point, a first control point, a second control point, and a line segment used to connect the first control point, the first preliminary contour point, and the second control point. The first control point, the first preliminary contour point, and the second control point are on a straight line. For example, as shown in b in FIG. 10A, when the user selects the contour point 3, the contour point 3 may be considered as the first preliminary contour point, and the electronic device may display the first control point A, the second control point B, and the line segment 1 on the two sides (for example, a left side and a right side) of the first preliminary contour point. The line segment 1 is a straight-line segment, and is used to connect the first control point A, the contour point 3, and the second control point B. The first control point A may be considered as a start point of the line segment 1, and the second control point B may be considered as an end point of the line segment 1. It should be understood that, FIG. 10A and FIG. 10B do not show a word representing the line segment 1.

In this embodiment of this application, the user may operate the first preliminary contour point, to adjust a part of graphs associated with the first preliminary contour point. The part of the graphs associated with the first preliminary contour point belongs to the second graph, and the part of the graphs associated with the first preliminary contour point may be understood as a graph between the first preliminary contour point and a second preliminary contour point in the second graph, and/or a graph between the first preliminary contour point and a third preliminary contour point. It should be understood that both the second preliminary contour point and the third preliminary contour point are adjacent to the first preliminary contour point.

For example, the first preliminary contour point is the contour point 3. The second preliminary contour point may be the contour point 2 (or the contour point 4), and the third preliminary contour point is the contour point 4 (or the contour point 2). In this way, graphs associated with the contour point 3 are "a graph between the contour point 2 and the contour point 3" and "a graph between the contour point 3 and the contour point 4".

For example, the first preliminary contour point is the contour point 1. A preliminary contour point adjacent to the contour point 1 is the contour point 2, and a part of the graphs associated with the contour point 1 is "a graph between the contour point 1 and the contour point 2". For example, the first preliminary contour point is the contour point 5. A preliminary contour point adjacent to the contour point 5 is the contour point 4, and a part of graphs associated with the contour point 5 is "a graph between the contour point 4 and the contour point 5".

The following describes a case in which the user operates the first preliminary contour point:
The user may select the first preliminary contour point, and move the first preliminary contour point. Correspondingly, in response to an operation of the user on the first preliminary contour point, the electronic device may translate, based on movement information of the first preliminary contour point, a part of the graphs associated with the first preliminary contour point. The movement information may include a movement direction and a movement distance.

For example, the user selects the first preliminary contour point and moves upward. For example, as shown in c in FIG. 10A, the user selects an anchor and moves upward by a distance D1. Correspondingly, in response to the operation of the user, the electronic device may translate the first preliminary contour point upward, and a translation distance is D1. Correspondingly, a part of the graphs associated with the first preliminary contour point is stretched upward.

The following describes a case in which the user operates the first control point or the second control point.

The user may select the first control point or the second control point, and adjust, by operating the first control point or the second control point, the part of the graphs associated with the first preliminary contour point. In this embodiment of this application, when the user operates the first control point, the electronic device may rotate the second control point. Similarly, when the user operates the second control point, the electronic device may rotate the second control point.

For example, the user selects the first control point A. As shown in c in FIG. 10B, the user selects the first control point, and moves upward by a distance D2. Correspondingly, in response to the operation of the user, the electronic device may rotate the second control point B downward, and a rotation distance is D2. It should be understood that a rotation direction of the second control point is opposite to a rotation direction (including clockwise and anticlockwise) of the first control point, but rotation angles are the same. It should be understood that a and b in FIG. 10B are the same as a and b in FIG. 10A. For details, refer to related descriptions in FIG. 10A.

It should be noted that, in c in FIG. 10B, to indicate the second control point B, a dashed-line arrow indicates the second control point B.

### Manner 2:

When a first graph includes an arc, a circular arc, an ellipse, or a circle, a graph obtained through fitting processing may be a smooth arc, a smooth circular arc, or a standard ellipse or circle. In this scenario, after an electronic device displays the second graph, the electronic device scales the second graph based on an affine transformation algorithm in response to a scaling operation on the second graph. The affine transformation algorithm is not described in detail in this embodiment of this application. For details, refer to descriptions of a current affine transformation algorithm.

In this embodiment of this application, after performing fitting processing on the first graph, the electronic device may further perform adjustment in different manners for different types of graph in response to an operation of the user, to ensure adjustment accuracy.

In conclusion, for the drawing method provided in this embodiment of this application, refer to FIG. 11. As shown in FIG. 11, for the S-shaped curve, the electronic device may process the first graph based on the piecewise Bezier algorithm, to obtain the second graph. After the electronic device displays the second graph, the electronic device may adjust the second graph in a joystick adjustment method in response to an operation of the user. For the joystick adjustment method, refer to descriptions in FIG. 10A and FIG. 10B. As shown in FIG. 11, for the arc, the circular arc, the ellipse, or the circle, the electronic device may process the first graph based on an elliptic fitting algorithm. When elliptic fitting succeeds, the electronic device may scale the second graph based on the affine transformation algorithm in response to an operation of the user. When elliptic fitting fails, the electronic device may process the first graph based on a cubic Bezier algorithm, and the electronic device may scale the second graph based on the affine transformation algorithm in response to an operation of the user.

It should be noted that data (including but not limited to data used for analysis, stored data, displayed data, and the like) in this application are information and data for which an authorization is obtained from a user or a full authorization is obtained from each party, and the collection, use, and processing of related data need to comply with related laws, regulations, and standards of related countries and regions. Corresponding operation entries are provided for the user to choose to authorize or deny.

In an embodiment, an embodiment of this application further provides an electronic device. As shown in FIG. 12, the electronic device may include a processor 1201 (for example, a CPU) and a memory 1202. The memory 1202 may include a high-speed random access memory (random access memory, RAM), or may include a non-volatile memory (non-volatile memory, NVM), for example, at least one disk memory. The memory 1202 may store various instructions, to complete various processing functions and implement the method steps of this application.

Optionally, the electronic device in this application may further include a power supply 1203, a communication bus 1204, and a communication port 1205. The communication port 1205 is configured to implement a connection and communication between the electronic device and another peripheral device. In this embodiment of this application, the memory 1202 is configured to store computer-executable program code. The program code includes instructions. When the processor 1201 executes the instructions, the instructions cause the processor 1201 of the electronic device to perform the actions in the foregoing method embodiments. Implementation principles and technical effects thereof are similar. Details are not described herein again.

Optionally, the electronic device in this application may further include a display 1206. The display 1206 is configured to display an interface of the electronic device.

It should be noted that the modules or components in the foregoing embodiments may be configured as one or more integrated circuits for implementing the foregoing methods, for example, one or more application-specific integrated circuits (application-specific integrated circuit, ASIC), one or more digital signal processors (digital signal processor, DSP), or one or more field programmable gate arrays (field programmable gate array, FPGA). For another example, when one of the foregoing modules is implemented in a form of scheduling program code by a processing element, the processing element may be a general-purpose processor, for example, a central processing unit (central processing unit, CPU) or another processor that can call the program code, for example, a controller. For another example, the modules may be integrated and implemented in a form of a system-on-a-chip (system-on-a-chip, SOC).

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid-State Disk (SSD)), or the like.

The term "a plurality of" in this specification refers to two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "divisible" relationship between associated objects. In addition, it should be understood that in description of this application, terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A drawing method, comprising:
displaying a first graph in response to a drawing operation;
identifying contour points of the first graph;
determining a type of the first graph based on the contour points of the first graph, wherein the type of the first graph comprises at least one of the following: an arc, an S-shaped curve, and a circular arc;
processing the first graph in a processing method corresponding to the type of the first graph, to obtain a second graph; and
displaying the second graph.

2. The method according to claim 1, wherein identifying the contour points of the first graph comprises:
identifying preliminary contour points of the first graph based on a polygonal approximation algorithm and a first threshold; and
for two adjacent contour points in the preliminary contour points, identifying fine contour points of the first graph based on the polygonal approximation algorithm and a second threshold, wherein the first threshold is different from the second threshold.

3. The method according to claim 2, wherein the first threshold and the second threshold are related to circumference of the first graph.

4. The method according to claim 2 or 3, wherein determining the type of the first graph based on the contour points of the first graph comprises:
determining the type of the first graph based on the contour points of the first graph when determining, based on curvature at the fine contour points, that no straight line exists in the first graph.

5. The method according to any one of claims 2 to 4, wherein determining the type of the first graph based on the contour points of the first graph comprises:
determining the type of the first graph based on a quantity of the preliminary contour points and a distribution of the preliminary contour points.

6. The method according to claim 5, wherein determining the type of the first graph based on the quantity of the preliminary contour points and the distribution of the preliminary contour points comprises:
when the quantity of the preliminary contour points is less than or equal to the first threshold, determining that the first graph is an arc; or
when the quantity of the preliminary contour points is greater than the first threshold and the distribution of the preliminary contour points meets a preset condition, determining that the first graph is an S-shaped curve, wherein the preset condition is that a first connection line and a second connection line cross; and the first connection line is a connection line between a first contour point and a fourth contour point, the second connection line is a connection line between a second contour point and a third contour point, and the first contour point, the second contour point, the third contour point, and the fourth contour point are consecutive and sequentially adjacent in the preliminary contour points; or
when the quantity of the preliminary contour points is greater than the first threshold and the distribution of the contour points does not meet the preset condition, determining that the first graph is a circular arc.

7. The method according to any one of claims 2 to 6, wherein processing the first graph in the processing method corresponding to the type of the first graph comprises:
processing the S-shaped curve based on a piecewise Bezier algorithm when the type of the first graph comprises the S-shaped curve.

8. The method according to claim 7, wherein processing the S-shaped curve based on the piecewise Bezier algorithm comprises:
processing a third connection line and a fourth connection line based on a Bezier curve algorithm, so that a second derivative at a crosspoint between the third connection line and the fourth connection line is 0, wherein the third connection line is a connection line between the first contour point and the second contour point, the fourth connection line is a connection line between the second contour point and the third contour point, and the first contour point, the second contour point, and the third contour point are consecutive and sequentially adjacent in the preliminary contour points.

9. The method according to claim 7 or 8, wherein when the type of the first graph is an S-shaped curve, and when the second graph is displayed, the method further comprises:
displaying the preliminary contour points on the second graph;
when a user selects a first preliminary contour point in the preliminary contour points, displaying, on two sides of the first preliminary contour point, a first control point, a second control point, and a line segment used to connect the first control point, the first preliminary contour point, and the second control point, wherein the first control point, the first preliminary contour point, and the second control point are on a straight line;
translating the first preliminary contour point in response to an operation of the user on the first preliminary contour point; and
rotating the second control point in response to an operation of the user on the first control point.

10. The method according to any one of claims 1 to 6, wherein processing the first graph in the processing method corresponding to the type of the first graph comprises:
processing the first graph based on an elliptic fitting algorithm when the type of the first graph is a non-S-shaped curve; and
processing the first graph based on a cubic Bezier algorithm when elliptic fitting processing fails.

11. The method according to claim 10, wherein when elliptic fitting processing succeeds, after displaying the second graph, the method further comprises:
scaling the second graph based on an affine transformation algorithm in response to a scaling operation on the second graph.

12. An electronic device, wherein the electronic device comprises one or more processors and a memory; and
the memory is coupled to the one or more processors, the memory is configured to store computer program code, the computer program code comprises computer instructions, and the one or more processors invoke the computer instructions to enable the electronic device to perform the method according to any one of claims 1 to 11.

13. A chip system, wherein the chip system is used in an electronic device, the chip system comprises one or more processors, and the one or more processors are configured to invoke computer instructions to enable the electronic device to perform the method according to any one of claims 1 to 11.

14. A computer-readable storage medium, wherein the computer-readable storage medium comprises computer instructions, and when the computer instructions are run on an electronic device, the electronic device is enabled to perform the method according to any one of claims 1 to 11.

15. A computer program product, wherein the computer program product comprises computer program code, and when the computer program code is run on an electronic device, the electronic device is enabled to perform the method according to any one of claims 1 to 11.
